# NEW EUROPEAN PATENT SPECIFICATION

(11) **EP 2 163 334 B2**
(45) Date of publication and mention of the opposition decision: **10.08.2016**
(45) Mention of the grant of the patent: 04.07.2012
(21) Application number: 09010105.6
(22) Date of filing: 05.08.2009
(51) Int. Cl.: B23B 9/08, B23Q 39/02

(54) **Machine comprising a drum having workpiece supporting spindles movable in the direction of the longitudinal axis of the drum**
Maschine mit einer Trommel mit Werkstückspindeln, die in der Längsachse der Trommel bewegbar sind
Machine comprenant un tambour avec des broches pour pièce à usiner se déplaçant le long de l'axe longitudinal du tambour

(30) Priority: 11.09.2008 IT MI20081622
(43) Date of publication of application: 17.03.2010
(73) Proprietor: Gildemeister Italiana S.p.A., 24030 Brembate Sopra (IT)
(72) Inventor: Rigolone, Franco, 24010 Ponteranica (IT); Persico, Enrico, 24022 Alzano Lombardo (IT); Rota, Renato, 24030 Carvico (IT)
(74) Representative: Erny, Tobias

(56) References cited:
- EP-A- 1 321 212
- EP-A- 1 632 309
- EP-B1- 0 834 379
- EP-B1- 1 772 231
- WO-A1-91/16161
- DE-A1- 1 652 670
- DE-A1- 3 333 243
- DE-T2- 60 303 672
- US-A- 4 665 781
- US-A1- 2005 235 788

## Description

### BACKGROUND OF THE INVENTION

The present invention relates to a multiple-spindle turning machine, including workpiece machining assemblies both on the front and on the rear sides thereof.

Prior multiple-spindle turning machines of the above mentioned type conventionally comprise a large-size drum which can be controllably rotatively driven to bring the individual spindles to a workpiece machining angular position, said rotary drum is is supporting a plurality of built-in spindles rotatively driving the workpieces for machining them by machining tools supported by cross slides mounted on the rotary drum supporting machine structure.

Prior cross slides, supporting the machining tools at said spindles, may be driven both along an X axis radially extending of the drum and along a Z axis longitudinally extending of said rotary drum.

To perform on the workpieces additional machining operations, in the direction of their tangential Y axes, it was necessary in the past to provide on the multiple-spindle turning machine with further mechanical assemblies of a comparatively large size, thereby greatly reducing the machine tool working region, and rendering the machine adjusting operations very long and complex; thus the turning machine will have an insufficient operating flexibility.

A typical further technical drawback of prior multiple-spindle machine tools is that only the workpiece cutting position is available thereon for machining the workpiece rear portion thereby the machining operations must be necessarily very simple and quick, to fit the machine operating time cycle.

For solving the above problems, prior methods greatly modified the machine tool structure to include therein a plurality of working places for machining the workpiece rear parts; alternatively a working platform including two series-coupled machine tools and a handling robot arrangement for monitoring the transfer of half-finished workpieces from a machine to the other has been also prepared.

Another drawback of prior multiple-spindle machines is that the lengths of the workpieces made by said machines are necessarily very small because of damaging flexures the workpieces would be subjected to as they are machined, thereby preventing proper tolerances from being achieved on each finished workpiece. Moreover, because of the available very restricted working region, it is also very difficult to properly unload the machined workpieces.

EP 0 834 379 A1 shows a lathe in which drums carry a number of work spindles work e.g. chucks in which workpieces are mounted. Each workpiece spindle has a linear drive which is mounted on the drum radially outside the spindle which it drives. The drives move the spindles along paths which are parallel to the axes of rotation of the drums. The spindles can be moved by numerical control equipment. The spindles are continuously coupled to their drives.

US 2005/235788 A1 shows a multi-spindle automatic lathe having an apparatus for machining the rear side of a workpiece. It is provided with a transfer device for removing a workpiece machined at its front side from a primary workpiece spindle of the machine and for transferring the workpiece to a machining station for the rear side machining, whereby the transfer device comprises a gripper as well as a translation device moveable parallel or coaxially to the workpiece spindle between this and a rear wall of the machining chamber, which translation device takes up the workpiece from the gripper for transfer to the machining station for the rear side machining.

DE 16 52 670 A1 shows a multi-spindle lathe having a rotary drum which supports tools which are arranged about an axis which is parallel to the rotary axis of the drum.

US 4,665,781 shows a machine tool including a carrier supporting a plurality of rotary spindles each carrying a chuck for holding a workpiece. The carrier can be indexed to move the spindles between different stations. Individual drive motors are provided. The drive motors remain stationery while the carrier is indexed and clutches are provided to couple each drive motor to a spindle to be driven. The carrier includes a central shaft supported at its ends on bearings and spindles are coupled to the shaft by supports.

EP 1 321 212 A1 shows an automatic lathe which is provided with a first spindle having an axis of rotation, a first tool rest capable of holding a plurality of tools in a parallel arrangement, a second tool rest capable of holding a plurality of tools in parallel arrangements in a first row and second row exhibiting mutually different nose orientations, and a second spindle having an axis of rotation parallel to the axis of rotation of the first spindle and capable of being located facing the first spindle, in such a manner as to be centrally carried on a lathe bed.

### SUMMARY OF THE INVENTION

Accordingly, the main object of the present invention is to overcome the above mentioned drawbacks of the prior art, and provide a multiple-spindle machine tool in which the space encompassing the rotary drum near the spindles is not occupied by additional fittings, thereby allowing, in a single multiple-spindle machine tool, to machine workpieces both on the front and on the rear sides and through a comparatively large length thereof, even if said workpieces are very slender. According to the present invention, the above mentioned object is achieved by a multiple-spindle turning machine according to claim 1. Dependent claims relate to preferred embodiments of the present invention. There may be provided a multiple-spindle turning machine having a upright machine supporting structure, rotatably supporting a drum bearing a plurality of workpiece supporting spindles, wherein the machine upright supports, at said spindles, cross slides supporting a plurality of machining tools for machining front end portions of the workpieces, and wherein, in the front of a rotary drum supporting platform, parallel guides arranged transversely of the machine bed are provided, said parallel guides supporting cross slides each including a workpiece spindle, and wherein to each of said workpiece spindle is operatively coupled a tool supporting element installed on a vertically movable slide and including tools for machining a rear portion of the workpiece.

Further advantages will better appear from the dependent claims, the following disclosure and accompanying drawings.

### BRIEF DESCRIPTION OF THE DRAWINGS

The present invention will be disclosed in a more detailed manner hereinafter, with reference to a multiple-spindle machine tool, given only by way of an example.

In the accompanying drawings:
Figure 1 shows the rotary drum of the multiple-spindle turning machine with the related spindles and machining tool supporting slides supported by the machine structure;
Figure 2 is a perspective view showing the rotary drum of the multiple-spindle machine, with the workpiece taking means for taking the workpiece after it has been machined on its front portion;
Figures 3 and 4 are perspective views showing the rotary drum and spindles with the driving means for driving the workpieces in two possible configurations, that is with and without a rotary bush;
Figure 5 is a schematic top plan view showing the multiple-spindle machine;
Figure 6 is a further perspective view of the multiple-spindle machine;
Figure 7 is a top plan view of the machine shown in some different machining steps thereof;
Figure 8 is a further top plan view of the multiplespindle machine in further machining steps thereof;
Figure 9 is another top plan view of the multiple spindle machine showing a step for taking a workpiece and a further machining step for machining a rear portion of said workpiece, and
Figure 10 is yet anothertop plan view of the machine and workpiece taking devices D therefor.

### DESCRIPTION OF THE PREFERRED EMBODIMENTS

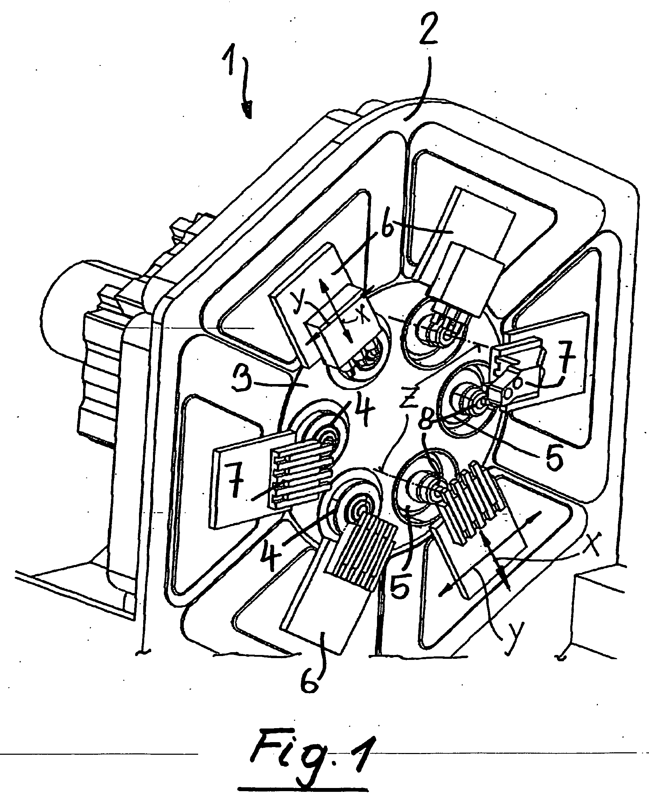

As shown in figure 1, the machine according to the present invention has been generally indicated by the reference number 1 and comprises a supporting upright structure 2, on which a per se known controllably rotatively driven drum 3 is rotatably supported.

The drum 3 supports a plurality of workpiece spindles 4 and 5, which will be discussed in a more detailed manner hereinafter.

Figures 1 shows that the supporting structure or platform 2 supporting said drum 3 also supports crossslides 6, which are equipped, in a per se known manner, with machining tools generally indicated by 7.

Advantageously, said machining tools 7 can be driven either along a radial axis X and along a tangential axis Y (see figure 1).

Such an arrangement allows to use machining tools 7 suitably chosen and arranged to perform machining operations on the front sides or portions of the workpieces, indicated by the reference number 8.

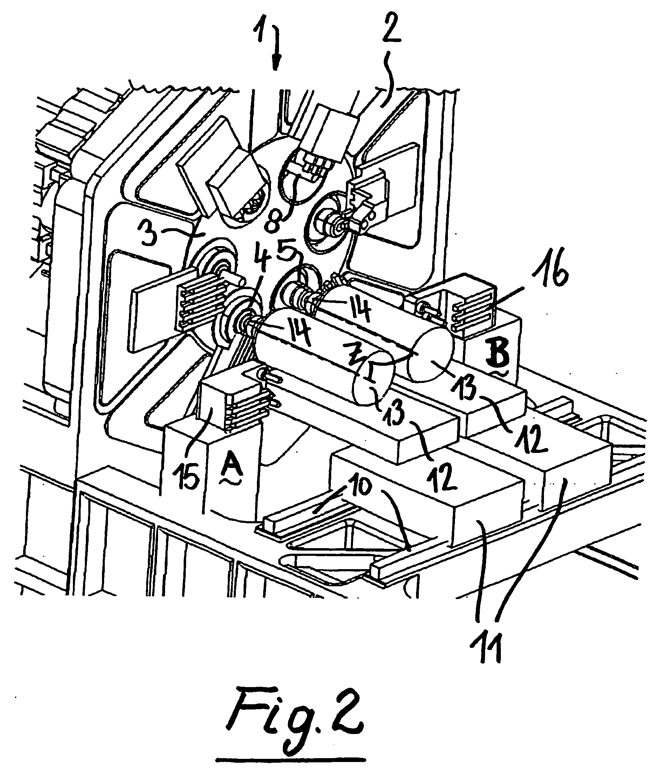

Figure 2 shows that, on the front of the drum 3 supported on the supporting platform 2 of the machine, the multiple spindle machine structure further supports parallel guides 10 extending transversely of the bed of the machine 1, in a horizontal plane.

The guides 10 support driving carriages 11 which are controllably driven independently, from one another, along said sliding parallel guides 10, and which can be driven by per se known driving systems such as ball recirculating screws and controllable motors or linear motors.

Each carriage 11 supports a slide 12 which is controllably driven along the longitudinal axis Z of the drum 3, each slide 12 supporting individually controllable motors 13 and including grippers for gripping the workpieces 8 from the drum 3 supported spindles 4 and 5.

The multiple-spindle machine 1 further supports machining tool holders 15 and 16 each mounted on corresponding vertically movable slides (A) and (B) which will be disclosed in a more detailed manner hereinafter.

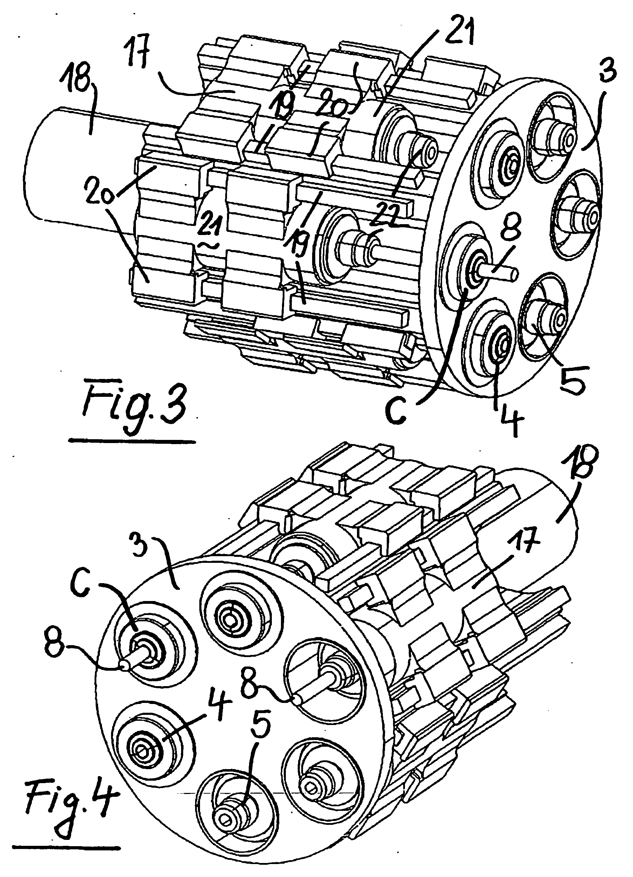

Figures 3 and 4 show, by a respective perspective view, the rotary drum 3 with the spindles adapted to be driven in the longitudinal direction of the axis Z of said drum.

The front portion of the drum 3 is integral with the structure 18 supporting, for each workpiece supporting rotary spindle, the parallel guides 19 thereon are slidably mounted skids 20 allowing the workpiece holder spindle 21 to be driven in a longitudinal direction Z of the rotary drum 3 axis.

The workpiece supporting spindle 21, through the gripper 22, rotatively drives the workpiece 8.

The figures show moreover a double configuration of the tool machine.

At the position 5 the machine tool has its basis configuration, in which the spindle rotatively drives the workpiece and displaces the latter in the Z direction, to cause said workpiece to directly project, from a required projection distance, from the front portion of the drum 3, which does not comprise supports. In this case, the workpiece has a small size and is not subjected to bending or flexural movements during its machining operations.

At the position 4, on the contrary, a rotary bush (C) is provided for supporting the great length slender workpiece 8, which a support is necessary for limiting the flexure of the slender workpiece inevitably occurring during the machining operations on the slides 6 of figure 1.

The rotary bush can be driven by per se known driving units, such as a mechanical driving unit including a drive shaft, or by a dependent auxiliary motor.

Thus, the two above machine configurations can be achieved from a same basic machine.

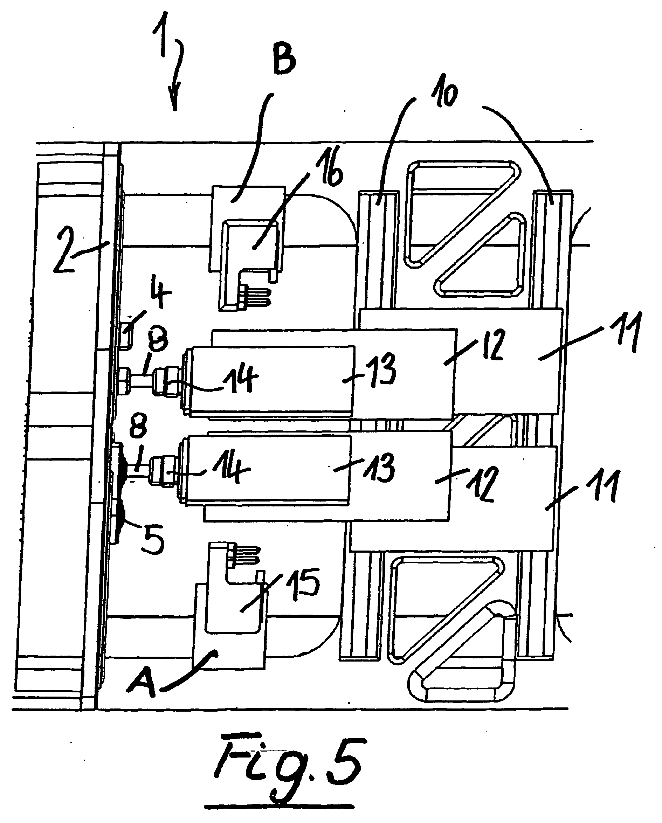

Figure 5 shows by a top plan view the main parts of the multiple-spindle machine 1.

In this figure it is possible to see the platform or structure 2 supporting the spindles 4 and 5, and the workpieces 8 to be machined.

Figure 5 also shows the cross parallel guides 10 slidably supporting the carriages 11 supporting the slides 12, in turn supporting the spindles 13 for rotatively driving the grippers 14.

Figure 5 shows moreover the tool holders 15 and 16 for machining the rear end portions of the workpieces 8, mounted on the vertically movable slides (A) and (B).

Furthermore, figure 5 also schematically shows that, at the end of the front machining operation on the workpieces 8, the spindles 13 will be already arranged at the front end portions of said workpieces 8, to be removed by the spindles 4 and 5 after the cutting operation.

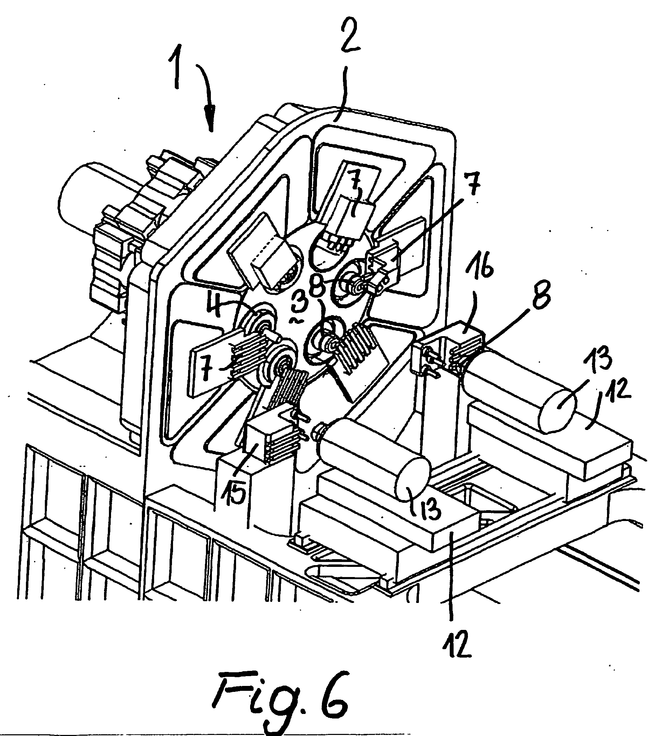

Thus, it is possible to carry out, on the same tool machine 1, a machining on the rearsides of the workpieces 8, by using, to that end, the machining tools of the assemblies 15 and 16. As shown in figure 6, the removed workpieces 8 are rotatively driven by the spindles 13 supported on the slide 12 and, owing to the provision of the tool holders 15 and 16, it is possible to cut workpieces 8 even on their rear sides.

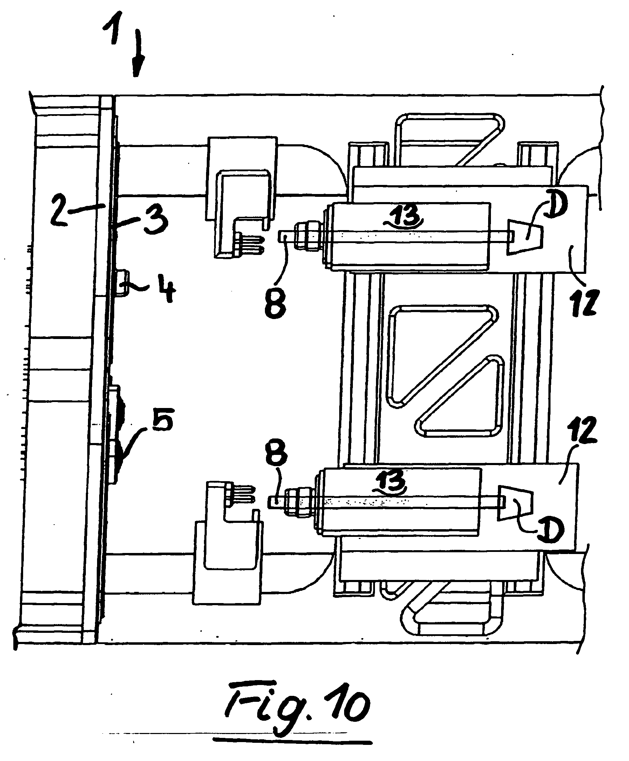

Figure 10 shows an example illustrating that the subject machine tool also provides a finished large length workpiece 8.

The spindles 13, driven by the slides 12, remove the workpiece 8 from the rotary drum 3 spindles 4 and 5. Upon having machined the rear sides by the tool holders 15 and 16, a driven arm (not shown in the drawing) disengages from the rear part of the spindles 13 the long workpiece 8 by the gripper element (D), see figure 10.

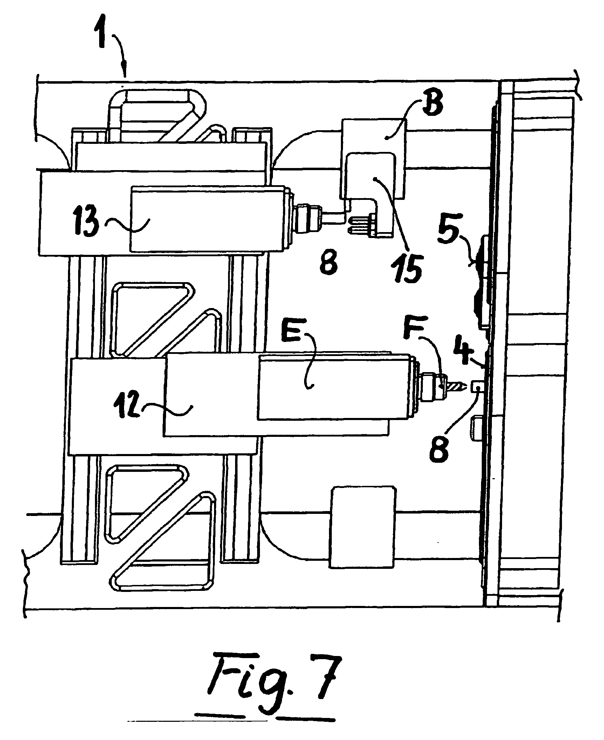

Figure 7 shows the basic configuration of the multiple-spindle tool machine.

The spindle 13 is herein used for machining the rear side or portion of the workpiece 8 just taken from the mandrel 5, by the tool holder 15 mounted on the vertical slide (B).

The slide 12 further supports a motor (E) for rotatively driving the tool (F) for machining the workpiece 8 in the spindle 4.

In such a configuration, the multiple-spindle assembly will have a single position for machining the workpiece rear side, and another position for machining, by a rotary tool, the workpiece front side.

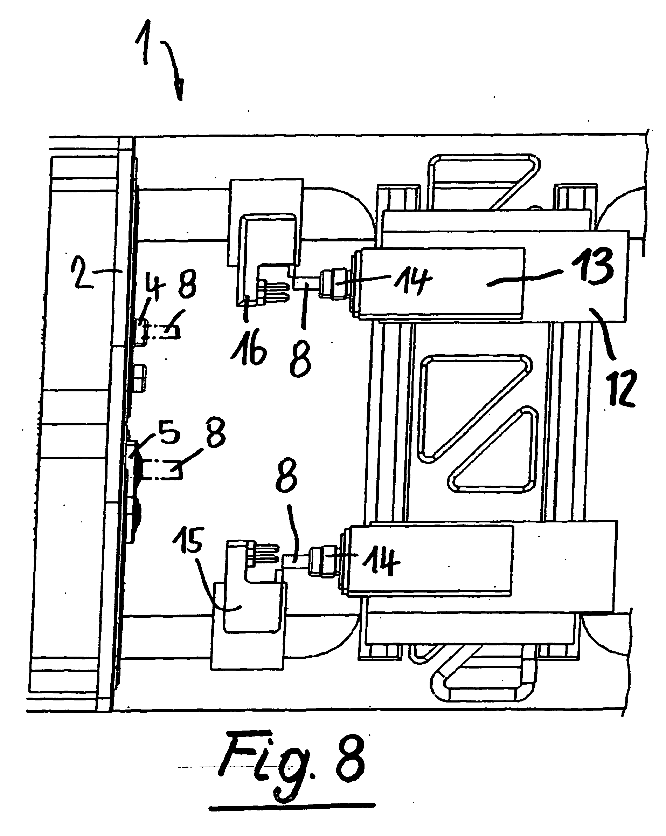

Figure 8 shows a further configuration or arrangement of the multiple-spindle machine tool.

This arrangement is herein called a "double cycle" arrangement, in which, in particular, said machine tool is programmed to simultaneously make two simple workpieces; the workpiece 8 being made by using three of the six available positions on the rotary drum 3, performing a two-snap displacement rotary movements at a time.

In the last position of the drum 3, the two workpieces 8, with the front machining portion finished thereon, are arranged in the spindles 4 and 5; at this time, the slides 12 will bring the spindles 13 to the workpiece gripping position, and then will be withdrawn up to the tool holders 15 and 16, to machine the rear side of the workpieces 8. At the end of the rear machining operations, the two machined workpieces being simultaneously unloaded.

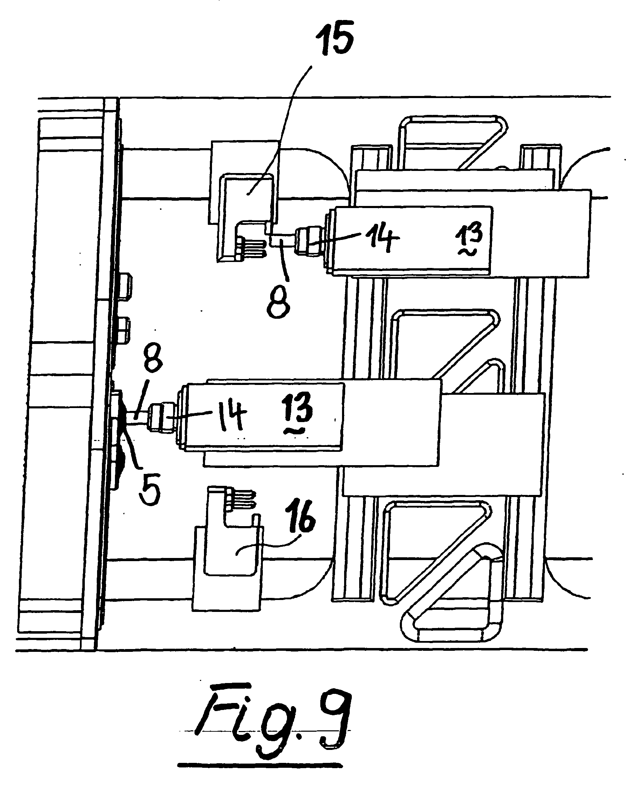

Figure 9 shows a further configuration or pattern of the multiple-spindle machine tool.

This pattern is herein called a "double recovery" pattern, since, in particular, the machine tool makes in this configuration a workpiece by long processing time rear machining operations.

In particular, the two spindles 13 make the same rear machining operations on the respective tool holders 15 and 16, which machining operations are offset of such a time as to allow the rotary drum 3 to bring the workpiece 8 to its end position 5.

Accordingly, said workpiece 8 is gripped by the two spindles 13, for the rear machining operations in an alternated manner.

## Claims

1. A multiple-spindle turning machine (1), comprising:
- a turning machine upright (2), and
- a rotary drum (3) bearing a plurality of first workpiece spindles (4, 5), said rotary drum (3) being supported by said turning machine upright (2) rotatably about a longitudinal axis of said rotary drum (3), wherein
said first workpiece spindles (4, 5) are adapted to be driven in a longitudinal direction (Z) of said longitudinal axis of said rotary drum (3), and
**characterized in that**
said turning machine upright (2) supports, for each of said first workpiece spindles (4, 5), a respective cross slide (6) configured to drive a respective tool bearing assembly (7) respectively along a respective radial X-axis extending in a radial direction (X) with respect to said rotary drum (3) and along a respective tangential Y-axis extending in a tangential direction (Y) with respect to said rotary drum (3).

2. A multiple-spindle turning machine according to claim 1, wherein said turning machine further comprises, in front of said turning machine upright (2), parallel guides (10) arranged transversely with respect to said longitudinal axis of said rotary drum (3) on a bed of said turning machine, said parallel guides (10) slidably supporting second cross slides (11, 12), each of which respectively supports a second workpiece spindle (13).

3. A multiple-spindle turning machine according to claim 2, wherein said turning machine further comprises vertical slides (A, B) on a side of each of said second spindles (13) respectively, said vertical slides (A, B) supporting tool holders (15, 16).

4. A multiple-spindle turning machine according to at least one of claims 1 to 3, wherein, for machining slender workpieces, said rotary drum (3) supports a rotary bush (C) in turn supporting a workpiece being machined while preventing said workpiece from bending.

5. A multiple-spindle turning machine, according to claim 2 or 3, wherein, for performing standard machining operations, one of said second workpiece spindles (13) is replaceable by a tool driving unit including a driving motor (E) for rotatively driving a machining tool (F) for performing front machining operations on the workpiece received at one of the first workpiece spindles (4, 5).

6. A multiple-spindle turning machine, according to claim 2, further comprising a numerical control device which is configured to control said multiple-spindle turning machine so as to perform double recovery machining operations according to which said second spindles (13) perform the same rear machining operations on the respective tool holders (15, 16), which machining operations are offset in time so as to allow said rotary drum (3) to bring a workpiece (8) to an end position (5), for machining workpieces requiring a long rear machining operating time.

7. A multiple-spindle turning machine, according to claim 2, further comprising a numerical control device which is configured to control said multiple-spindle turning machine so as to perform double cycle machining operations according to which said rotary drum (3) performs a two-snap displacement rotary movement at a time so that two workpieces can be received simultaneously at said second spindles (13), respectively, and the two machined workpieces can be simultaneously unloaded for simultaneously producing two simple workpieces.

## Patentansprüche

1. Mehrfachspindel-Drehmaschine (1) mit:
- einem Drehmaschinenständer (2), und
- einer Drehtrommel (3), die mehrere erste Werkstückspindeln (4, 5) trägt, wobei die Drehtrommel (3) von dem Drehmaschinenständer (2) um eine Längsachse der Drehtrommel (3) drehbar gehalten wird, wobei
die ersten Werkstückspindeln (4, 5) dazu eingerichtet sind, entlang der Längsrichtung (Z) der Längsachse der Drehtrommel (3) angetrieben zu werden, und **dadurch gekennzeichnet, dass**
der Drehmaschinenständer (2) für jede der ersten Werkstückspindeln (4, 5) einen Querschlitten (6) trägt, um eine jeweilige Werkzeughaltebaugruppe (7) längs einer radialen X-Achse, die sich in einer radialen Richtung (X) der Drehtrommel (3) erstreckt, und längs einer tangentialen Y-Achse, die sich in einer tangentialen Richtung (Y) der Drehtrommel (3) erstreckt, anzutreiben.

2. Mehrfachspindel-Drehmaschine nach Anspruch 1, wobei die Drehmaschine weiterhin vor dem Drehmaschinenständer (2) parallele Führungen (10) umfasst, die quer zur Längsachse der Drehtrommel (3) auf einem Bett der Drehmaschine angeordnet sind, wobei die parallelen Führungen (10) zweite Querschlitten (11, 12) verschiebbar tragen, von denen jeder jeweils eine zweite Werkstückspindel (13) trägt.

3. Mehrfachspindel-Drehmaschine nach Anspruch 2, wobei die Drehmaschine weiterhin jeweils einen vertikalen Schlitten (A, B) auf einer Seite von jeder der zweiten Spindeln (13) umfasst, wobei die vertikalen Schlitten (A, B) Werkzeugaufnahmen (15, 16) tragen.

4. Mehrfachspindel-Drehmaschine nach mindestens einem der Ansprüche 1 bis 3, wobei die Drehtrommel (3) zum spanenden Bearbeiten schmaler Werkstücke eine Drehbuchse (C) hält, die wiederum ein Werkstück hält, das spanend bearbeitet wird, während sie verhindert, dass das Werkstück verbogen wird.

5. Mehrfachspindel-Drehmaschine nach Anspruch 2 oder 3, wobei zur Durchführung von Standard-Bearbeitungsvorgängen eine der zweiten Werkzeugspindeln (13) durch eine Werkzeug-Antriebseinheit ersetzt werden kann, welche einen Antriebsmotor (E) zum rotierenden Antreiben eines Bearbeitungswerkzeugs (F) zur Durchführung von vorderen Bearbeitungsvorgängen an dem Werkstück umfasst, das an einer der ersten Werkstückspindeln (4, 5) aufgenommen ist.

6. Mehrfachspindel-Drehmaschine nach Anspruch 2, weiterhin mit einer numerischen Steuerungsvorrichtung, die dazu konfiguriert ist, die Mehrfachspindel-Drehmaschine so zu steuern, dass sie Doppelwiedergewinnungs-Bearbeitungsvorgänge durchführt, gemäß welchen die zweiten Spindeln (13) die gleichen rückwärtigen Bearbeitungsvorgänge an den jeweiligen Werkzeugaufnahmen (15, 16) durchführen, welche Bearbeitungsvorgänge zeitlich versetzt sind, um zu erlauben, dass die Drehtrommel (3) ein Werkstück (8) in eine Endposition (5) für die Bearbeitung von Werkstücken bringt, die eine lange rückwärtige Bearbeitungsvorgangszeit erfordern.

7. Mehrfachspindel-Drehmaschine nach Anspruch 2, weiterhin mit einer numerischen Steuerungsvorrichtung, die dazu konfiguriert ist, die Mehrfachspindel-Drehmaschine so zu steuern, dass sie Doppelzyklus-Bearbeitungsdurchgänge durchführt, gemäß welchen die Drehtrommel (3) eine Zweirast-Verlagerungsdrehbewegung zu einer Zeit durchführt, so dass zwei Werkstücke gleichzeitig jeweils an den zweiten Spindeln (13) aufgenommen und die zwei bearbeiteten Werkstücke gleichzeitig entladen werden können, um gleichzeitig zwei einfache Werkstücke herzustellen.

## Revendications

1. Machine (1) de tournage à broches multiples comprenant :
- une colonne (2) de machine de tournage, et
- un tambour (3) rotatif portant une pluralité de premières broches (4, 5) pour pièce à usiner, le tambour (3) rotatif étant supporté par la colonne (2) de machine de tournage à rotation autour d'un axe longitudinal du tambour (3) rotatif, dans laquelle
les premières broches (4, 5) pour pièce à usiner sont conçues pour être entraînées dans une direction (Z) longitudinale de l'axe longitudinal du tambour (3) rotatif, et
**caractérisée en ce que**
la colonne (2) de machine de tournage supporte, pour chacune des premières broches (4, 5) pour pièce à usiner, un chariot (6) transversal entraînant l'ensemble (7) respectif porte-outils respectivement selon un axe radial X respectif s'étendant dans une direction (X) radiale par rapport au tambour (3) rotatif et selon un axe tangentiel Y respectif s'étendant dans une direction (Y) tangentielle par rapport au tambour (3) rotatif.

2. Machine de tournage à broches multiples suivant la revendication 1, dans laquelle la machine de tournage comprend en outre, en avant de la colonne (2) de la machine de tournage, des guidages (10) parallèles, dirigés transversalement à l'axe longitudinal du tambour (3) rotatif sur un banc de la machine de tournage, les guidages (10) parallèles supportant à coulissement des deuxièmes chariots (11, 12) transversaux, chacun d'entre eux supportant respectivement une deuxième broche (13) pour pièce à usiner.

3. Machine de tournage à broches multiples suivant la revendication 2, dans laquelle la machine de tournage comprend en outre des chariots (A, B) verticaux d'un côté de chacune des deuxièmes broches (13) respectivement, les chariots (A, B) verticaux supportant des porte-outils (15, 16).

4. Machine de tournage à broches multiples suivant au moins l'une des revendications 1 à 3, dans laquelle, pour usiner des pièces oblongues, le tambour (3) rotatif supporte un coussinet (C) rotatif supportant à son tour une pièce en train d'être usinée en l'empêchant de se courber.

5. Machine de tournage à broches multiples suivant la revendication 2 ou 3, dans laquelle, pour effectuer des opérations de tournage normalisées, l'une des deuxièmes broches (13) pour pièce à usiner peut être remplacée par un groupe d'entraînement d'outils, comprenant un moteur d'entraînement (E) pour entraîner en rotation un outil (F) d'usinage, afin d'effectuer des opérations d'usinage de front sur la pièce reçue à l'une des premières broches (4, 5) pour pièce à usiner.

6. Machine de tournage à broches multiples suivant la revendication 2, comprenant en outre un dispositif numérique de commande, qui est configuré pour commander la machine de tournage à broches multiples de manière à effectuer des opérations d'usinage à double rétablissement, dans lesquelles les deuxièmes broches (13) effectuent les mêmes opérations d'usinage arrière sur les porte-outils (15, 16) respectifs, ces opérations d'usinage étant décalées dans le temps de manière à permettre au tambour (3) rotatif de mettre une pièce (8) à usiner à une position (5) d'extrémité pour usiner des pièces à usiner exigeant une durée de fonctionnement de l'usinage assez longue.

7. Machine de tournage à broches multiples suivant la revendication 2, comprenant en outre un dispositif numérique de commande, qui est configuré pour commander la machine de tournage à broches multiples de manière à effectuer des opérations d'usinage à double cycle, suivant lesquelles le tambour (3) rotatif effectue un mouvement de rotation en déplacement à deux déclics à la fois de sorte que deux pièces à usiner peuvent être reçues simultanément sur les deuxièmes broches (13) respectivement et deux pièces usinées peuvent être déchargées simultanément pour produire simultanément deux pièces à usiner simples.
